# EUROPÄISCHE PATENTANMELDUNG

(11) **EP 4 199 019 A1**
(43) Veröffentlichungstag der Anmeldung: **21.06.2023**
(21) Anmeldenummer: 22210875.5
(22) Anmeldetag: 01.12.2022
(51) Int. Cl.: H01H 3/28, B60L 3/00, B60L 3/04, H01H 71/28, H01H 5/02, H01H 9/54, H01H 51/22

(54) **SCHUTZSCHALTER**

(30) Priorität: 17.12.2021 DE 102021214611
(71) Anmelder: Ellenberger & Poensgen GmbH, 90518 Altdorf (DE)
(72) Erfinder: KÖPF, Hendrik-Christian, 90480 Nürnberg (DE); HOFMEISTER, Lothar, 92318 Neumarkt (DE); ENGEWALD, Manuel, 90411 Nürnberg (DE); MIKLIS, Markus, 90592 Schwarzenbruck (DE); PIMENTA, Ricardo, 90542 Eckental (DE); WATZLAWICK, Michael, 90425 Nürnberg (DE); HIERETH, Fabian, 92283 Lauterhofen (DE)
(74) Vertreter: FDST Patentanwälte

(57) **Zusammenfassung**

Die Erfindung betrifft einen Schutzschalter (12) mit einem in einen Hauptstrompfad (18) eingebrachten mechanischen Schalter (26), der einen Festkontakt (28) und einen an einer dazu beweglich gelagerten Kontaktbrücke (32) angebundenen Bewegkontakt (34) aufweist. Der Schutzschalter (12) weist einen Antrieb (38) auf, der in Wirkverbindung mit der Kontaktbrücke (32) ist, und der eine erste Antriebseinheit (39) und eine zweite Antriebseinheit (40) umfasst. Die erste Antriebseinheit (39) ist mittels eines Steuerkreises (42) bestromt, und die zweite Antriebseinheit (40) ist in den Hauptstrompfad (18) eingebracht. Ferner betrifft die Erfindung ein Kraftfahrzeug (2).

## Beschreibung

Die Erfindung betrifft ein Schutzschalter mit einem in einen Hauptstrompfad eingebrachten mechanischen Schalter. Ferner betrifft die Erfindung ein Kraftfahrzeug mit einem Schutzschalter.

In zunehmendem Maße weisen Kraftfahrzeuge, wie Nutzkraftwagen, also Busse oder Lastkraftwagen (Lkw) einen oder mehrere Elektromotoren als Hauptantrieb auf, der direkt der Fortbewegung dient. Zum Betrieb des oder der Elektromotoren ist meist eine Hochvoltbatterie vorgesehen, mittels derer eine Gleichspannung in einer Höhe zwischen 400 V und 800 V bereitgestellt wird. Die zwischen der Hochvoltbatterie und dem Elektromotor geführten elektrischen Ströme betragen bei Betrieb dabei mehrere 10 A.

Im Fehlerfall, wie bei einem Kurzschluss oder einem Unfall, ist es erforderlich, die Hochvoltbatterie elektrisch von weiteren Bestandteilen des Kraftfahrzeugs, wie dem Elektromotor, zu trennen. Hierfür wird üblicherweise ein Schutzschalter herangezogenen, der einen Schalter aufweist, der in einen zwischen der Hochvoltbatterie und dem Elektromotor vorhandenen Hauptstrompfad eingebracht ist. Der Schutzschalter ist dabei derart ausgestaltet, dass bei Überschreiten eines bestimmten Grenzwerts durch den mittels des Hauptstrompfads geführten elektrischen Strom, der Schalter betätigt wird, sodass der elektrische Stromfluss unterbunden wird.

Als Schalter ist zum Beispiel ein Halbleiterschalter vorgesehen. Bei diesem treten jedoch während des Betriebs vergleichsweise hohe elektrische Verluste auf, was den Wirkungsgrad und somit auch die Reichweite des Kraftfahrzeugs verringert. Alternativ hierzu ist als Schalter ein (mechanisches) Relais vorgesehen, das einen Festkontakt und einen dazu beweglich gelagerten Bewegkontakt aufweist. Der Bewegkontakt ist hierbei meist an einer Kontaktbrücke angebunden, die mittels einer als Elektromagnet wirkenden elektrischen Spule angetrieben ist. Aufgrund dessen ist eine Trägheit vergrößert, sodass der Schalter eine vergleichsweise langsame Schaltzeit aufweist. Zum Vermeiden hiervon ist es möglich, eine elektrische Spule mit einer vergleichsweise hohen Windungszahl heranzuziehen, was jedoch zu erhöhten Herstellungskosten führt. Auch ist auf diese Weise die auf die Kontaktbrücke wirkende Kraft vergleichsweise hoch, weswegen eine mechanische Belastung vergrößert ist.

Der Erfindung liegt die Aufgabe zugrunde, einen besonders geeigneten Schutzschalter und ein besonders geeignetes Kraftfahrzeug anzugeben, wobei vorteilhafterweise eine Sicherheit erhöht und/oder Herstellungskosten sowie eine Belastung reduziert sind.

Hinsichtlich des Schutzschalters wird diese Aufgabe durch die Merkmale des Anspruchs 1 und hinsichtlich des Kraftfahrzeugs durch die Merkmale des Anspruchs 10 erfindungsgemäß gelöst. Vorteilhafte Weiterbildungen und Ausgestaltungen sind Gegenstand der jeweiligen Unteransprüche.

Der Schutzschalter dient insbesondere der Absicherung, also dem Schutz, einer elektrischen Leitung und/oder einer Komponente, wie eines Geräts. Mit anderen Worten handelt sich bei dem Schutzschalter somit um einen Leitungsschutzschalter bzw. einen Geräteschutzschalter.

Der Schutzschalter weist einen Hauptstrompfad auf, in den ein mechanischer Schalter eingebracht ist. Mittels des Hauptstrompfads wird dabei bei Betrieb ein elektrischer Strom geführt, und/oder an diesem liegt eine elektrische Spannung an, wobei im Fehlerfall, also wenn die Absicherung erforderlich ist, der elektrische Stromfluss über den Hauptstrompfad insbesondere unterbrochen werden soll. Vorzugsweise ist der Hauptstrompfad zumindest teilweise mittels einer Stromschiene gebildet, die beispielsweise aus einem Metall, vorzugsweise einem Kupfer, wie reinem Kupfer oder eine Kupferlegierung, zum Beispiel Messing, gefertigt ist. Zweckmäßigerweise weist der Schutzschalter zumindest zwei Anschlüsse auf, mittels derer der Hauptstrompfad mit weiteren Komponenten im Montagezustand verbunden ist. Die Anschlüsse sind zum Beispiel zueinander baugleich oder unterschiedlich und beispielsweise jeweils ein Schraub- oder Steckanschluss.

Der mechanische Schalter, der im Weiteren insbesondere auch lediglich als Schalter bezeichnet ist, weist einen Festkontakt und einen Bewegkontakt auf, der an einer bezüglich des Festkontakts beweglich gelagerten Kontaktbrücke angebunden ist. Folglich ist auch ist der Bewegkontakt beweglich zum Festkontakt gelagert, nämlich mittels der Kontaktbrücke. Beispielsweise ist der Bewegkontakt an der Kontaktbrücke festgeschweißt und zum Beispiel einstückig mit dieser. Alternativ hierzu ist der Bewegkontakt aus einem von der Kontaktbrücke abweichenden Material gefertigt. Beispielsweise ist der Festkontakt festgehalten und dessen Position somit starr. Alternativ hierzu ist auch die Position des Festkontakts variabel, und dieser ist zum Beispiel mittels einer weiter Brücke oder sonstiger mechanischen Gegebenheiten beweglich gelagert.

Vorzugsweise umfasst der Schutzschalter ein Gehäuse, das zum Beispiel aus einem Kunststoff gefertigt ist, und innerhalb dessen sowohl der Festkontakt als auch der Bewegkontakt angeordnet ist. Hierbei ist die Kontaktbrücke zweckmäßigerweise mittels eines Scharniers oder sonstigen Lagers an dem Gehäuse gelagert, beispielsweise eines Gleitlagers. In einer Weiterbildung ist mittels des Gehäuses selbst eine Führung gebildet, mittels derer die Kontaktbrücke gelagert ist. Der Festkontakt ist besonders bevorzugt starr an dem Gehäuse oder zumindest unbeweglich bezüglich des Gehäuses angeordnet, weswegen eine Konstruktion vereinfacht ist. Zum Beispiel ist die Kontaktbrücke mechanisch direkt mit einer starren (etwaigen) Stromschiene des Hauptstrompfads verbunden und somit insbesondere mit einem der etwaigen Anschlüsse. Zur beweglichen Lagerung ist die Kontaktbrücke dabei zweckmäßigerweise schwenkbar gelagert.

Besonders bevorzugt jedoch ist die Kontaktbrücke mittels eines Stanzbiegeteils, oder eines sonstigen Metallstreifens gebildet und transversal verschieblich gelagert. Zweckmäßigerweise ist dabei an der Kontaktbrücke ein weiterer Bewegkontakt angebunden. Dem weiteren Bewegkontakt ist zweckmäßigerweise ein weiterer Festkontakt zugeordnet, und beim Bewegen der Kontaktbrücke wird geeigneterweise ein mechanischer Kontakt zwischen dem Bewegkontakt und dem Festkontakt sowie zwischen dem weiteren Bewegkontakt und dem weiteren Festkontakt erstellt oder aufgehoben, insbesondere je nach Bewegungsrichtung der Kontaktbrücke.

Zusammenfassend ist, wenn der mechanische Kontakt zwischen dem Bewegkontakt und dem Festkontakt besteht, der mechanische Schalter geschlossen und elektrisch leitend. Wenn der Bewegkontakt mittels der Kontaktbrücke von dem Festkontakt beabstandet ist, ist der Schalter geöffnet und elektrisch nicht leitend. Somit ist der Schalter, je nach Position (Zustand) der Kontaktbrücke, entweder in dem geöffneten oder geschlossenen Zustand oder zum Beispiel einer Position dazwischen. In dieser ist der Abstand zwischen dem Bewegkontakt und dem Festkontakt nicht maximal, jedoch ist keine mechanische Anlage zwischen diesen vorhanden. Beispielsweise umfasst der Schalter eine Arretierung oder sonstige Verklinkung, mittels derer die Kontaktbrücke in dem geöffneten oder geschlossenen Zustand arretiert ist. Mit anderen Worten ist der Schalter somit monostabil oder bistabil ausgestaltet. Sofern die Arretierung lediglich in einem der Zustände erfolgt, ist dieser beispielsweise der geschlossene oder geöffnete Zustand. Aufgrund der Arretierung/Verklinkung ist es erforderlich, eine Kraft zum Verbringen der Kontaktbrücke, also zum Betätigen des Schalters, aufzuwenden, sodass ein unbeabsichtigtes Betätigen des (mechanischen) Schalters, beispielsweise aufgrund einer Vibration des Schutzschalters, ausgeschlossen ist.

Der Schutzschalter umfasst ferner einen Antrieb, der in Wirkverbindung mit der Kontaktbrücke ist. Mittels Betätigung des Antriebs ist es möglich, die Kontaktbrücke von zumindest einer der beiden Positionen in die andere, also die geschlossene bzw. geöffnete, zu bewegen. Mit anderen Worten ist es möglich, mittels Betätigung des Antriebs, den Schalter zu schalten.

Der Antrieb weist eine erste Antriebseinheit und eine zweite Antriebseinheit auf, die insbesondere separat voneinander betreibbar oder betrieben sind, oder die zumindest abhängig von unterschiedlichen Gegebenheiten/Umständen aktiv sind, sodass die Kontaktbrücke bewegt wird. Hierbei ist die erste Antriebseinheit mittels eines Steuerkreises bestromt. Mit anderen Worten ist zur Versorgung der ersten Antriebseinheit der Steuerkreis vorgesehen, mittels dessen die erste Antriebseinheit somit gespeist ist. Besonders bevorzugt ist der Steuerkreis galvanisch von dem Hauptstromkreis getrennt, sodass in einem Fehlerfall in dem Hauptstrompfad eine Rückwirkung auf den Steuerkreis unterbunden ist. Somit kann das Bestromen der ersten Antriebseinheit im Wesentlichen ungestört erfolgen. Der Steuerkreis ist beispielsweise über den Hauptstrompfad gespeist, insbesondere mittels eines Transformators. In einer Weiterbildung ist der Steuerkreis mittels einer separaten Energiequelle gespeist, und der Schutzschalter weist hierfür insbesondere weitere Anschlüsse auf, die zum Beispiel in das etwaige Gehäuse des Schutzschalters eingebracht sind. Zweckmäßigerweise weist der Steuerkreis ein Spannungsniveau auf, das von dem Spannungsniveau, oder zumindest dem elektrischen Potential, abweicht, das mit dem Hauptstrompfad geführt ist. Insbesondere wird hierbei der Steuerkreis mit einer geringeren elektrischen Spannung betrieben. Somit ist eine Konstruktion des Schutzschalters vereinfacht.

Die zweite Antriebseinheit ist in den Hauptstrompfad eingebracht und wird auf diese Weise insbesondere mittels des über den Hauptstrompfad geführten elektrischen Stroms bestromt. Hierbei ist die Konstruktion der zweiten Antriebseinheit zweckmäßigerweise derart, dass mittels der zweiten Antriebseinheit lediglich eine Beeinflussung der Position der Kontaktbrücke im dem Fehlerfall, erfolgt also beispielsweise bei einer Überlast oder einem Überstrom. Dahingegen führt im Normalbetrieb, also wenn keine Absicherung erforderlich ist, der mittels des Hauptstrompfads geführten elektrische Strom nicht zu einer Verstellung der Kontaktbrücke. Geeigneterweise ist in diesem Fall die mittels der zweite Antriebseinheit aufgebrachte Kraft zu gering.

Aufgrund der beiden Antriebseinheiten ist es somit möglich, den Schutzschalter unabhängig von dem Fehlerfall zu betätigen, sodass ein Einsatzbereich vergrößert ist. Zweckmäßigerweise ist die mittels der ersten Antriebseinheit bereitgestellte Kraft vergleichsweise gering, sodass in diesem Fall die Schaltzeit vergleichsweise langsam ist, wobei jedoch eine mechanische Belastung verringert ist. Daher ist es möglich, eine vergleichsweise leistungsschwache erste Antriebseinheit heranzuziehen, weswegen Herstellungskosten reduziert sind. Wenn der Fehlerfall auftritt, ist mittels der erste Antriebseinheit ein Veranlassen einer Bewegung der Kontaktbrücke und somit ein Öffnen des mechanischen Schalters möglich. Jedoch wirkt auch die zweite Antriebseinheit unterstützend. Zweckmäßigerweise ist dabei die zweite Antriebseinheit derart ausgestaltet, dass im Fehlerfall eine vergleichsweise große Kraft ausgeübt wird, die insbesondere größer als die mittels der erste Antriebseinheit bereitgestellte Kraft ist. Infolgedessen weist der Schutzschalter eine vergleichsweise geringe Schaltzeit auf, weswegen eine Sicherheit erhöht ist. Auch ist aufgrund der beiden Antriebseinheiten bei einer Fehlfunktion einer dieser dennoch ein Öffnen des mechanischen Schalters möglich, weswegen eine Sicherheit erhöht ist. Mit anderen Worten ist eine Redundanz gebildet, wobei zum Beispiel auch beim Ausfall des Steuerkreises dennoch ein sicheres Auftrennen ermöglicht ist.

Zusammenfassend ist es mittels der beiden Antriebseinheiten ermöglicht, eine vergleichsweise große Kraft auf den mechanischen Schalter auszuüben, sodass dieser vergleichsweise stark beschleunigt wird. Infolgedessen ist auch eine Schaltzeit des mechanischen Schalters beschleunigt, geeigneterweise im Fehlerfall. Jedoch ist es auch möglich, den mechanischen Schalter lediglich mit einer der Antriebseinheiten zu betätigen, wie insbesondere der ersten Antriebseinheit, sodass eine elektrische und auch mechanische Belastung sowie ein Energiebedarf verringert ist. Infolgedessen ist ein Einsatzbereich des Schutzschalters vergrößert, und dieser wird zum Beispiel auch beim Normalbetrieb zum Unterbrechen des elektrischen Stroms herangezogen, wobei lediglich eine der Antriebseinheiten bestromt wird. Im Fehlerfall hingegen werden beide Antriebseinheiten zum Betätigen des Schalters herangezogen. Somit ist eine Anzahl an benötigten Bauteilen verringert. Dabei ist aufgrund des mechanischen Schalters ein elektrischer Widerstand des Schutzschalters vergleichsweise gering, sodass bei Betrieb des Schutzschalters keine oder lediglich vergleichsweise geringe elektrische Verluste auftreten. Auch ist mittels des Schutzschalters ein galvanisches Trennen ermöglicht, weswegen eine Sicherheit erhöht ist.

Der Schutzschalter ist vorzugsweise zur Gleichstromunterbrechung ausgestaltet und zum Beispiel lediglich unidirektional oder besonders bevorzugt bidirektional. Geeigneterweise weist der Schutzschalter einen weiteren Hauptstrompfad auf, wobei zwischen dem Hauptstrompfad und dem weiteren Hauptstrompfad bei Betrieb eine elektrische Spannung anliegt. Zum Beispiel ist der weitere Hauptstrompfad elektrisch mit Masse verbunden, oder der Schutzschalter weist einen weiteren mechanischen Schalter auf, der in den weiteren Hauptstrompfad eingebracht ist, und der mittels eines entsprechenden Antriebs betätigt ist. Somit ist eine Sicherheit weiter erhöht. Besonders bevorzugt ist eine maximal mittels des Schutzschalters schaltbare elektrische Spannung größer als 100 V, 200 V oder 500 V. Zum Beispiel ist die maximal mittels des Schutzschalters schaltbare elektrische Spannung kleiner als 3500 V oder 3000 V. Hierfür ist der Schutzschalter jeweils geeignet, insbesondere vorgesehen und eingerichtet. Zum Beispiel ist der Schutzschalter zum Schalten einer elektrischen Spannung von 1000 V vorgesehen, und/oder einem Schalten eines elektrischen Stroms von mehreren 100 A, also beispielsweise 200 A, 400 A, 600 A oder 800 A. Hierfür ist der Schutzschalter zweckmäßigerweise jeweils geeignet, vorzugsweise eingerichtet.

Besonders bevorzugt wird der Schutzschalter in einem Kraftfahrzeug verwendet, insbesondere in einem Bordnetz, mittels dessen ein elektrischer Gleichstrom geführt ist. Besonders bevorzugt ist der Schutzschalter ein Bestandteil eines Hochvoltbordnetz des Kraftfahrzeugs und dient insbesondere der Absicherung einer Hochvoltbatterie und/oder eines Elektromotors eines Kraftfahrzeugs, mittels dessen insbesondere ein Antrieb erfolgt. Das Kraftfahrzeug ist beispielsweise ein Schiff, Bott oder Luftfahrzeug. Besonders bevorzugt jedoch ist das Kraftfahrzeug landgebunden und zum Beispiel schienengeführt. Das Kraftfahrzeug ist in diesem Fall beispielsweise ein Triebwagen, eine Lokomotive, ein Zug oder eine Straßenbahn. Alternativ ist das Kraftfahrzeug unabhängig von Schienen oder dergleichen bewegbar. Zweckmäßigerweise ist das Kraftfahrzeug ein Personenkraftwagen (Pkw) oder besonders bevorzugt ein Nutzkraftwagen, wie zum Beispiel ein Bus oder ein Lastkraftwagen (Lkw). Alternativ ist der Schutzschalter für den industriellen Bereich vorgesehen und beispielsweise im Montagezustand ein Bestandteil einer Industrieanlage.

Geeigneterweise weist der Schutzschalter einen Handschalter auf, der in Wirkverbindung mit dem mechanischen Schalter ist, vorzugsweise mit der Kontaktbrücke. Mittels des Handschalters ist es geeigneterweise möglich, den mechanischen Schalter in einen bestimmten Zustand zu verbringen, beispielsweise in den geschlossenen Zustand oder den geöffneten Zustand. Zum Beispiel ist ein Verbringen in den jeweils anderen Zustand aufgrund einer zwischen dem mechanischen Schalter und dem Handschalter angeordneten Mechanik nicht möglich. Besonders bevorzugt jedoch ist es möglich, mittels des Handschalters den mechanischen Schalter sowohl in den geschlossenen als auch in den geöffneten Zustand zu überführen. Zusammenfassend ist der Schutzschalter somit auch handbetätigbar, und es ist somit insbesondere möglich, den Schutzschalter zurückzusetzen. Alternativ oder in Kombination ist es zum Beispiel mittels des Schutzschalters möglich, einen Betrieb manuell zu unterbinden, beispielsweise des etwaigen Kraftfahrzeugs.

Geeigneterweise umfasst der Schutzschalter eine weitere Mechanik, die auf den mechanischen Schalter wirkt, und mittels dessen der mechanische Schalter zurückgesetzt werden kann. Insbesondere ist hierfür der Antrieb oder ein weiterer Antrieb vorgesehen. Somit ist nach dem Auslösen des Schutzschalters auch ein Zurücksetzen ermöglicht, sodass dieser erneut stromführend ist. Hierfür ist zweckmäßigerweise keine manuelle Tätigkeit erforderlich.

Der Schutzschalter umfasst vorzugsweise eine Steuereinheit, mittels derer die erste Antriebseinheit bestromt ist. Somit wird auch die Steuereinheit mittels des Steuerkreises gespeist und folglich über diesen bestromt. Hierbei ist die Steuereinheit insbesondere derart ausgestaltet, dass mittels dieser der Fehlerfall erkannt wird, und dass im Fehlerfall die erste Antriebseinheit derart bestromt oder zumindest betätigt wird, dass der Schalter geöffnet wird, also der Bewegkontakt von dem Festkontakt beabstandet wird. Hierfür ist die Steuereinheit insbesondere geeignet sowie vorgesehen und eingerichtet. Alternativ oder in Kombination hierzu ist die Steuereinheit signaltechnisch mit weiteren Bestandteilen im Montagezustand verbunden und weist zweckmäßigerweise einen entsprechenden Anschluss hierfür auf. Zum Beispiel weist die Steuereinheit einen Anschluss an ein etwaiges Bussystem des etwaigen Kraftfahrzeugs auf. Geeigneterweise dient der Schutzschalter der Bereitstellung von funktionaler Sicherheit, und die Steuereinheit ist entsprechend ausgestaltet. Insbesondere ist es hierbei möglich, verschiedene Sicherheitsfunktionen mittels des Schutzschalters zu realisieren, und die Steuereinheit ist zum Beispiel entsprechend zertifiziert oder in dieser sind zumindest die unterschiedlichen Ansteuerarten für die erste Antriebseinheit zur Bereitstellung der funktionalen Sicherheit hinterlegt. In einer Weiterbildung wird mittels der Steuereinheit insbesondere der Strom für die Bestromung der ersten Antriebseinheit gesteuert und/oder geregelt, wobei beispielsweise eine Pulsweitenmodulation herangezogen wird. Auf diese Weise ist es möglich, eine Schaltzeit der ersten Antriebseinheit einzustellen.

Zum Beispiel umfasst der Schutzschalter eine zweite Steuereinheit, mittels derer die zweite Antriebseinheit gesteuert oder zumindest überwacht ist. Die zweite Steuereinheit ist beispielsweise mittels des Steuerkreises oder über den Hauptstrompfad gespeist. Alternativ hierzu wird die zweite Antriebseinheit mittels der Steuereinheit gesteuert oder überwacht. Besonders bevorzugt jedoch ist die zweite Antriebseinheit nicht gesteuert/geregelt, weswegen eine Robustheit erhöht ist.

Die Steuereinheit weist beispielsweise einen Auslöser auf, der insbesondere nach Art eines Schalters ausgestaltet ist. Der Auslöser ist beispielsweise in direkter Nähe oder in mechanischem Kontakt mit dem Hauptstrompfad angeordnet oder beispielsweise ein Bestandteil des Hauptstrompfads. Insbesondere wird mittels des Auslösers der mittels des Hauptstrompfads geführte elektrische Strom, und/oder die daran anliegende elektrische Spannung erfasst, und in Abhängigkeit hiervon der Antrieb, insbesondere die erste Antriebseinheit, bestromt. Der Auslöser ist zum Beispiel magnetisch ausgestaltet und beispielsweise ein Reed-Relais oder umfasst zumindest dieses. Alternativ hierzu ist der Auslöser hydraulisch ausgestaltet oder besonders bevorzugt ein thermischer Auslöser, wie zum Beispiel eine Bimetallschnappscheibe, ein sonstiges Bimetallelement, ein Kaltleiter (PTC) oder ein Heißleiter (NTC).

Beispielsweise ist die Steuereinheit mittels des Auslösers gebildet, und der Auslöser ist zweckmäßigerweise elektrisch in Reihe mit der ersten Antriebseinheit geschaltet. Alternativ hierzu ist der jeweilige Auslöser lediglich nach Art eines Signalgebers ausgestaltet, und signaltechnisch mit weiteren Komponenten der Steuereinheit verbunden. Die Steuereinheit selbst ist dabei beispielsweise mittels analoger Bauteile realisiert, oder diese weist zum Beispiel einen Mikrocontroller auf.

Besonders bevorzugt ist die Steuereinheit signaltechnisch mit einem Stromsensor des Hauptstrompfads verbunden. Der Stromsensor ist dabei geeignet, insbesondere vorgesehen und eingerichtet, den mittels des Hauptstrompfads geführten elektrischen Strom zu messen. Die Steuereinheit ist dabei insbesondere mittels eines Mikrocontrollers realisiert, oder umfasst zumindest diesen, oder weist mehrere diskrete, analoge Bauteile auf. Beispielsweise umfasst der Stromsensor eine elektrische Spule oder zum Beispiel einen Shunt, der in den Hauptstrompfad eingebracht ist.

In Abhängigkeit des mittels des Stromsensors erfassten Werts für den elektrischen Strom wird zweckmäßigerweise mittels der Steuereinheit die erste Antriebseinheit bestromt, sodass die Kontaktbrücke und folglich der mechanische Schalter betätigt wird. Aufgrund einer derartigen Ausgestaltung ist insbesondere eine Flexibilität erhöht, und es ist insbesondere möglich, den Schutzschalter bei unterschiedlichen Anwendungsbereichen einzusetzen. Infolgedessen ist auch das Schalten des mechanischen Schalters in einem Fehlerfall möglich, bei dem mittels der zweiten Antriebseinheit keine Beeinflussung des Schaltzustands des Schalters erfolgt. Infolgedessen ist ein Einsatzbereich des Schutzschalters vergrößert.

Besonders bevorzugt umfasst der Schutzschalter alternativ oder in Kombination zumindest einen oder mehrere elektrische Spannungssensoren, mittels derer beispielsweise die über den mechanischen Schalter abfallende elektrische Spannung, die über den etwaigen Stromsensor abfallende elektrische Spannung, die über die erste und/oder Antriebseinheit abfallende elektrische Spannung und/oder die zwischen dem Hauptstrompfad und dem etwaigen weiteren Hauptstrompfad anliegende elektrische Spannung gemessen werden kann. Vorzugsweise erfolgt dabei mittels der Steuereinheit eine Bestromung der ersten Antriebseinheit in Abhängigkeit der jeweils erfassten Werte. Geeigneterweise erfolgt mittels der Steuereinheit eine Auswertung der zeitlichen Änderung des elektrischen Stroms bzw. der elektrischen Spannung sowie die Betätigung des Antriebs, insbesondere der ersten Antriebseinheit, in Abhängigkeit hiervon. Folglich ist auch ein Erfassen unterschiedlichster Fehlerfälle ermöglicht, weswegen eine Sicherheit erhöht ist.

Besonders bevorzugt umfasst die Steuereinheit einen Energiespeicher zur Bestromung der ersten Antriebseinheit. Insbesondere wird bei Betrieb der Energiespeicher mittels des Steuerkreises geladen. Somit ist auch bei einem Ausfall der Bestromung über den Steuerkreis ein Betätigen des Antriebs, insbesondere der ersten Antriebseinheit, ermöglicht, weswegen stets eine Sicherheit gewährleistet ist. Besonders bevorzugt ist der Energiespeicher als Kondensator ausgestaltet, der beispielsweise elektrisch parallel zu der ersten Antriebseinheit oder weiteren Bestandteilen der Steuereinheit, wie dem etwaigen Mikrocontroller, geschaltet ist. Mittels des Kondensators werden somit auch etwaige Spannungsschwankungen in dem Steuerkreis ausgeglichen, weswegen die erste Antriebseinheit bzw. die weiteren Bestandteile der Steuereinheit geschützt und ein sicherer Betrieb ermöglicht ist. Mit anderen Worten erfolgt mittels des Kondensators ein Dämpfen kurzzeitiger Stromsprünge.

Zum Beispiel umfasst die Steuereinheit eine Ladungspumpe, einen Spannungsvervielfacher oder eine sonstige Komponente, mittels derer es möglich ist, den Energiespeicher auf eine höhere elektrische Spannung zu laden, als mittels des Steuerkreises bereitgestellt ist. Auf diese Weise ist mittels des Energiespeichers eine vergleichsweise große Menge elektrische Energie bei Betrieb gespeichert, sodass bei Ausfall des Steuerkreises auch weitere Komponenten der Steuereinheit bestromt werden können, oder für den Betrieb des Antriebs, insbesondere der ersten Antriebseinheit, eine vergrößerte Menge an elektrischer Energie bereitgestellt ist, sodass sicher ein Betätigen des mechanischen Schalters erfolgt.

Zum Beispiel arbeiten die beiden Antriebseinheiten nach dem gleichen Prinzip oder unterschiedlichen Prinzipien (Wirkweisen/Wirkprinzipien). So umfasst zumindest eine der Antriebseinheiten beispielsweise einen Wirbelstromantrieb, eine Wirbelstromspule, einen Reluktanzantrieb, eine Reluktanzspule, einen Piezo-Aktor, oder die jeweilige Antriebseinheit ist mittels einer Kombination hieraus gebildet. Vorzugsweise sind die beiden Antriebseinheiten baugleich oder zumindest nach den gleichen Wirkprinzipien aufgebaut, was eine Konstruktion vereinfacht. Auch ist es möglich, zumindest teilweise Gleichteile zu verwenden. Alternativ hierzu unterscheiden sich die Konstruktion und/oder Wirkweisen der beiden Antriebseinheiten, sodass eine Robustheit und Sicherheit erhöht ist. Besonders bevorzugt weist der Antrieb einen "Moving Magnet Aktuator" auf, der im Weiteren insbesondere auch lediglich als Aktuator bezeichnet ist, und mittels dessen die beiden Antriebseinheiten gebildet sind.

Der "Moving Magnet Aktuator" ("Moving Magnet Actuator") weist einen Permanentmagneten auf, der beweglich gelagert ist. Zum Beispiel ist der Permanentmagnet drehbeweglich gelagert oder besonders bevorzugt linear beweglich. Der Permanentmagnet ist an der Kontaktbrücke angebunden oder zumindest in Wirkverbindung mit dieser, sodass bei einer Bewegung des Permanentmagneten die Kontaktbrücke vorzugsweise bewegt wird. Zudem weist jede Antriebseinheit eine oder mehrere elektrische Spulen auf, die bei Betätigung der jeweiligen Antriebseinheit bestromt werden, sodass zwischen diesen und dem Permanentmagneten eine magnetische Wechselwirkung erfolgt. Die elektrischen Spulen sind dabei ortsfest gehalten.

Da die elektrische(n) Spule(n) stationär gehalten ist/sind, ist eine Konstruktion vereinfacht, und es sind, mit Ausnahme der für die Lagerung erforderlichen Komponenten keine weiteren beweglich Bauteile oder elektrischen Verbindungen zwischen den beweglichen Bauteilen, nämlich dem Permanentmagneten, und den stationären Bauteilen des "Moving Magnet Aktuators" erforderlich. Somit ist auch eine Reibung verringert. Da die Anzahl der beweglichen Bestandteile des "Moving Magnet Aktuators", insbesondere lediglich der Permanentmagnet, vergleichsweise gering ist, und diese insbesondere ein vergleichsweise geringes Gewicht aufweisen, ist eine Dynamik des Aktuators vergleichsweise hoch. Somit ist eine Trägheit beim Betätigen der Kontaktbrücke und somit beim Betätigen des Schalters verringert. Infolgedessen ist mittels des Schutzschalters ein vergleichsweise schnelles Schalten ermöglicht, weswegen eine Sicherheit erhöht ist.

Beispielsweise ist der Aktuator rotatorisch ausgestaltet oder besonders bevorzugt linear. In diesem Fall weist jede Antriebseinheit zwei konzentrisch auf einer (gemeinsamen) Achse angeordnete elektrische Spulen auf, die entlang der Achse zueinander beabstandet sind, und zwischen denen der Permanentmagnet angeordnet ist, dessen beiden Polen sich bezüglich der Achse gegenüberliegen, und der beweglich entlang der Achse gelagert ist. Die beiden elektrischen Spulen jeder Antriebseinheit werden hierbei insbesondere bei dem jeweiligen Betrieb gleichzeitig bestromt, und sind beispielsweise elektrisch in Reihe oder besonders bevorzugt elektrisch parallel zueinander geschaltet. Die Verschaltung der elektrischen Spulen ist hierbei derart, dass, wenn diese bestromt werden, mittels der elektrischen Spulen ein Magnetfeld erstellt wird, das mit dem Magnetfeld des Permanentmagneten derart wechselwirkt, dass dieser entlang der Achse zu einer der elektrischen Spulen der jeweiligen Antriebseinheit gezogen und von der anderen elektrischen Spule der gleichen Antriebseinheit weggedrückt wird. Folglich wirkt eine vergleichsweise große Kraft auf den Permanentmagneten, weswegen eine Dynamik weiter erhöht ist.

Insbesondere ist jede der elektrischen Spulen der einen der Antriebseinheiten von jeweils einer der elektrischen Spulen der anderen Antriebseinheit umgeben, und diese sind insbesondere jeweils zueinander konzentrisch angeordnet. Somit ist ein vergleichsweise kompakter "Moving Magnet Aktuator" bereitgestellt. Besonders bevorzugt weisen die elektrischen Spulen der zweiten Antriebseinheit eine vergleichsweise geringe Windungszahl auf, die zweckmäßigerweise geringer als 50, 30 oder 20 ist. Somit wird im Normalbetrieb mittels dieser, die stets von dem mittels des Hauptstrompfads geführten elektrischen Stroms durchflossen sind, lediglich ein vergleichsweise schwaches Magnetfeld bereitgestellt. Infolgedessen sind die elektrischen Verluste des Schutzschalters vergleichsweise gering. Bei einem vergleichsweise großen Überstrom jedoch wird mittels der zweiten Antriebseinheit ein vergleichsweise starkes Magnetfeld erstellt, sodass der Permanentmagnet bewegt wird. Auf diese Weise ist es zudem möglich, einen vergleichsweise großen Querschnitt für den elektrischen Leiter der elektrischen Spulen zu verwenden, sodass eine Stromtragfähigkeit erhöht ist. Besonders bevorzugt umgibt hierbei jeweils eine der elektrischen Spulen der zweiten Antriebseinheit eine der elektrischen Spulen der ersten Antriebseinheit.

Besonders bevorzugt weist der "Moving Magnet Aktuator" zudem ein (magnetisches) Kurzschlussblech oder dergleichen auf, mittels derer der Permanentmagnet in einer bestimmten Stellung gehalten wird, wenn keine Bestromung der elektrischen Spule(n) erfolgt. Zum Beispiel liegt in diesem Fall der Permanentmagnet an dem Kurzschlussblech an oder ist besonders bevorzugt zu diesem stets beabstandet. Das Kurzschlussblech ist zweckmäßigerweise aus einem ferromagnetischen Material erstellt, wie zum Beispiel Eisen, weswegen Herstellungskosten reduziert sind. Aufgrund des Kurzschlussblechs wird der Permanentmagnet in einer Stellung stabilisiert, insbesondere wenn der Schalter geschlossen ist. Folglich ist der mechanische Schalter zumindest monostabil oder bistabil ausgestaltet.

In einer weiteren Alternative ist lediglich eine der Antriebseinheiten mittels des Aktuators gebildet. Die andere Antriebseinheit ist zum Beispiel hiervon separat und insbesondere als Wirbelstromantrieb oder Reluktanzantrieb ausgestaltet.

Beispielsweise ist die Kontaktbrücke mit einer Kraft beaufschlagt, beispielsweise einer Federkraft, und diese wird zum Beispiel mittels einer Verklinkung in einer bestimmten Position gehalten. Hierbei wirkt der Antrieb insbesondere auf die Verklinkung, sodass bei Bestromung des Antriebs die Verklinkung gelöst wird. Infolgedessen wird die Kontaktbrücke aufgrund der weiteren wirkenden Kraft bewegt. Infolgedessen ist es nicht erforderlich, mittels des Antriebs eine vergleichsweise große Kraft auszuüben, wobei dennoch ein vergleichsweise schnelles Betätigen des mechanischen Schalters erfolgt.

Besonders bevorzugt jedoch ist der Antrieb mechanisch mit der Kontaktbrücke gekoppelt, und insbesondere ist der Permanentmagnet über eine Mechanik an der Kontaktbrücke angebunden. Mit anderen Worten wird bei Betrieb die Kontaktbrücke aufgrund der mittels des Antriebs ausgeübten Kraft bewegt. Infolgedessen ist eine Anzahl an benötigten Bauteilen reduziert. In einer Weiterbildung ist die Kontaktbrücke verklinkt, und der Antrieb wirkt sowohl auf die Verklinkung als auch auf die Kontaktbrücke. Zweckmäßigerweise ist dabei ein weiteres Bauteil vorhanden, mittels dessen ebenfalls eine Kraft auf die Kontaktbrücke ausgeübt wird, wie beispielsweise die Feder. Auf diese Weise erfolgt das Betätigen des mechanischen Schalters, also das Verstellen der Kontaktbrücke, sowohl mittels des Antriebs als auch mittels des weiteren Bauteils, wie der Feder, sodass eine Schaltgeschwindigkeit weiter erhöht ist. Dabei ist die mittels des Antriebs aufzubringende Kraft verringert, sodass dieser vergleichsweise kleinbauend ausgestaltet werden kann. Dabei wird jedoch auch die mittels des Antriebs aufgebrachte Kraft zum Verbringen der Kontaktbrücke herangezogen, sodass die bereitgestellte Kraft vergleichsweise effizient genutzt wird. In einer Alternative oder Weiterbildung wirkt eine der Antriebseinheiten auf die etwaige Verklinkung, und die andere Antriebseinheit wirkt auf die Kontaktbrücke und ist somit mit dieser gekoppelt.

Beispielsweise ist die Kontaktbrücke starr an einer mittels des Antriebs angetriebenen transversal gelagerten Stange befestigt. Bevorzugt jedoch ist die Kontaktbrücke an der Stange ebenfalls transversal gelagert, wobei zweckmäßigerweise zwei Endanschläge für eine Begrenzung der Bewegung der Kontaktbrücke bezüglich der Stange vorhanden sind. Somit ist es möglich, die Kontaktbrücke zwischen diesen beiden Endanschlägen zu bewegen, sodass zum Beispiel bei einem etwaigen Abbrand der Kontakte oder hohen Fertigungstoleranzen dennoch eine sichere, vollflächige mechanische Anlage des Bewegkontakt an dem Festkontakt Takts im geschlossenen Zustand des Schutzschalters vorliegt. Insbesondere ist hierbei einer der Endanschläge derart ausgestaltet, dass dennoch mittels des Antriebs die Kontaktbrücke aus dem geschlossenen Zustand bewegt werden kann. Mit anderen Worten ist der Abstand der Endanschläge zueinander vorzugsweise geringer als der Stellweg des Antriebs. Aufgrund des verbleibenden Endanschlags ist dabei auch ein Bewegen der Kontaktbrücke unabhängig von dem aktuellen Zustand des Antriebs möglich, sodass bei einem vergleichsweise hohen fließenden elektrischen Strom aufgrund der sogenannten Holmschen Engekraft ein ebenfalls Abheben der Kontaktbrücke erfolgt, sodass der Bewegkontakt von dem Festkontakt getrennt wird. Dies erfolgt beispielsweise bereits bevor die Kontaktbrücke mittels des Antriebs bewegt wird. Mit anderen Worten wirken auf die Kontaktbrücke in diesem Fall sowohl die mittels des Antriebs aufgebrachte Kraft als auch die aufgrund der vorhandenen magnetischen Felder vorhandenen Kräfte, sodass eine Schaltgeschwindigkeit erhöht ist. Vorzugsweise ist zwischen einem der Endanschläge und der Kontaktbrücke eine Feder angeordnet, mittels derer die Kontaktbrücke in eine bestimmte Position bewegt wird, wenn keine weiteren Kräfte wirken.

Beispielsweise ist der Schutzschalter lediglich mittels des Hauptstrompfads, des mechanischen Schalters, ggf. der Steuereinheit sowie des Antriebs gebildet. Besonders bevorzugt jedoch umfasst der Schutzschalter eine Sicherung. Beispielsweise ist die Sicherung elektrisch in Reihe zu dem mechanischen Schalter geschaltet, und diese ist insbesondere derart ausgestaltet, dass diese auslöst, wenn der mechanische Schalter eine Fehlfunktion aufweist. Auf diese Weise ist eine Sicherheit erhöht. Besonders bevorzugt jedoch ist die Sicherung parallel zu dem mechanischen Schalter geschaltet. Wenn der mechanische Schalter geschlossen ist, fließt der elektrische Strom über diesen, und an der Sicherung liegt im Wesentlichen keine elektrische Spannung an. Bei Betätigen des mechanischen Schalters, also wenn dieser geöffnet wird, kommutiert der elektrische Strom auf die Sicherung, sodass zwischen dem Bewegkontakt und dem Festkontakt kein Lichtbogen entsteht. Aufgrund des über die Sicherung fließenden (elektrischen) Stroms löste die Sicherung zweckmäßigerweise aus, sodass der Stromfluss über die Sicherung unterbrochen wird. Zu diesem Zeitpunkt ist geeigneterweise der Bewegkontakt aufgrund des Antriebs von dem Festkontakt schon so weit beabstandet, dass kein Lichtbogen mehr entsteht. Infolgedessen ist der elektrische Stromfluss über den Schutzschalter beendet. Zusammenfassend erfolgt ein vergleichsweise sicheres Unterbrechen des elektrischen Stroms, wobei das Ausbilden eines Lichtbogens, über den noch weiterhin elektrische Strom geführt wird, unterbunden ist.

Beispielsweise ist die Sicherung derart ausgestaltet, dass mittels dieser der bei Normalbetrieb auftretende elektrische Strom getragen werden kann, also dass in diesem Fall die Sicherung nicht auslöst. Vorzugsweise jedoch ist die Sicherung derart bemessen, dass diese auslöst, wenn bei Normalbedingungen, also wenn kein Fehlerfall vorliegt, der Schalter geöffnet wird. Auf diese Weise ist ein Schaltverhalten des Schutzschalters im Fehlerfall beschleunigt. Zudem ist es auf diese Weise möglich, eine vergleichsweise kostengünstige Sicherung heranzuziehen, die lediglich für einen geringen Nennstrom ausgelegt ist, und insbesondere als flinke Sicherung ausgestaltet ist. Hierbei erfolgt die Betätigung des Schutzschalters, also das Auslösen, mittels Betätigens des Antriebs, was vergleichsweise genau eingestellt werden kann. Die Sicherung dient lediglich dem kurzzeitigen Führen des elektrischen Stroms, um das Ausbilden des Lichtbogens bei dem mechanischen Schalter zu unterbinden oder zumindest zu verkürzen. Somit ist es möglich, auch Sicherungen mit einer vergleichsweise großen Fehlertoleranzen heranzuziehen, weswegen Herstellungskosten reduziert sind. Aufgrund des mechanischen Schalters ist dabei ein vergleichsweise genaues Einstellen des Schutzschalters möglich, also wann dieser auslöst.

Alternativ oder in Kombination hierzu ist parallel zu dem mechanischen Schalter ein Halbleiterschalter geschaltet. Insbesondere wird als Halbleiterschalter ein MOSFET, ein IGBT, ein IGCT oder GTO herangezogen. Der Halbleiterschalter ist beispielsweise mittels einer separaten Spannungsversorgung, beispielsweise über den Steuerkreis, versorgt. Alternativ wird der Halbleiterschalter mittels der elektrischen Spannung versorgt, die über den (geöffneten/öffnenden) mechanischen Schalter abfällt. Insbesondere ist dabei die Verschaltung derart, dass beim Öffnen des mechanischen Schalters der Halbleiterschalter stromführend wird, sodass sich bei dem mechanischen Schalter kein Lichtbogen ausbildet. Nachdem der mechanische Schalter geöffnet ist, wird insbesondere der Halbleiterschalter ebenfalls geöffnet, sodass der elektrische Strom unterbrochen wird. Hierbei ist bei Normalbetrieb zweckmäßigerweise der Halbleiterschalter nicht stromführend, also wenn der mechanische Schalter geschlossen ist, sodass bei dem Halbleiterschalter keine elektrischen Verluste auftreten, weswegen ein Wirkungsgrad verbessert ist.

Bevorzugt ist dem Halbleiterschalter eine separate Steuereinheit zugeordnet, oder dieser wird zum Beispiel mittels der etwaigen Steuereinheit betrieben, mittels derer auch der Antrieb, insbesondere die erste Antriebseinheit, bestromt ist. Somit ist eine Anzahl an benötigten Bauteilen verringert.

Besonders bevorzugt weist der Schutzschalter einen weiteren Halbleiterschalter auf, der in Reihe mit dem Halbleiterschalter geschaltet ist, wobei mittels der Reihenschaltung der mechanische Schalter überbrückt ist. Dabei sind die beiden Halbleiterschalter zweckmäßigerweise antiseriell verschaltet. Alternativ sind die beiden Halbleiterschalter antiparallel verschaltet. Infolgedessen ist der Schutzschalter bidirektional betreibbar. Beispielsweise sind die beiden Halbleiterschalter zueinander baugleich oder unterschiedlich. In einer weiteren Alternative ist anstatt dem weiteren Halbleiterschalter eine Diode elektrisch zu dem Halbleiterschalter in Reihe geschaltet. In einer Weiterbildung ist der mechanische Schalter mit einer Verschaltung überbrückt, die den Halbleiterschalter aufweist, der elektrisch zwischen zwei Paaren von jeweils zwei Dioden geschaltet ist, die jeweils zueinander antiparallel geschaltet sind. Mit anderen Worten ist ein B4-Brückenschaltung vorhanden, mittels der insbesondere ein Gleichrichter realisiert ist. Mittels der Dioden wird hierbei sichergestellt, dass die Richtung des Stromflusses über den Halbleiterschalter stets gleich ist, unabhängig von der Stromflussrichtung über den Hauptstrompfad. Somit ist der Schutzschalter bidirektional ausgestaltet, wobei lediglich der einzige Halbleiterschalters vorhanden ist.

Alternativ oder in Kombination hierzu ist zweckmäßigerweise parallel zu dem oder den Halbleiterschaltern bzw. der Reihenschaltung ein Varistor geschaltet, mittels dessen insbesondere eine elektrische Überspannung an dem Halbleiterschalter bzw. der Verschaltung, vermieden ist, der zu einer Beschädigung führen könnte. In einer weiteren Alternative umfasst der Schutzschalter mehrere Thyristoren, die antiparallel zueinander verschaltet sind, und mittels derer der mechanische Schalter überbrückt ist.

Besonders bevorzugt umfasst der mechanische Schalter eine Löschkammer, innerhalb derer zweckmäßigerweise die Kontaktbrücke angeordnet ist.

Beispielsweise umfasst die Löschkammer hierbei mehrere Löschbleche und/oder einen Permanentmagneten, mittels dessen ein etwaiger, beim Betätigen des mechanischen Schalters zwischen dem Bewegkontakt und dem Festkontakt entstehender Lichtbogen abgelöscht wird.

Bevorzugt umfasst die Löschkammer in einer Stapelrichtung übereinander gestapelte Löschstreifen, also mehrere Löschstreifen, insbesondere mindestens zwei Löschstreifen und geeigneterweise weniger als 100 Löschstreifen. Vorzugsweise beträgt die Anzahl der Löschstreifen zwischen 5 und 80, zwischen 8 und 50 oder zwischen 10 und 30. Geeigneterweise ist die Anzahl der Löschstreifen kleiner gleich 20. Die Löschstreifen sind flächig ausgestaltet und erstrecken sich somit jeweils lediglich einer Ebene. Senkrecht zu dieser Ebene ist die Ausdehnung jedes Löschstreifens verringert, und die Ausdehnung, die auch als Dicke bezeichnet ist, ist zweckmäßigerweise kleiner oder gleich 2 mm, 1,5 mm oder 1 mm. Die Löschstreifen sind zweckmäßigerweise senkrecht zur Stapelrichtung angeordnet sowie jeweils parallel zueinander. Vorzugsweise überdecken sich dabei die Projektionen der Löschstreifen parallel zur Stapelrichtung zumindest teilweise, vorzugsweise vollständig. Somit ist eine vergleichsweise kompakte Löschkammer bereitgestellt.

Die Löschstreifen sind aus einer Keramik erstellt, die insbesondere elektrischen nicht leitend und vorzugsweise thermisch leitend ist. Besonders bevorzugt wird als Keramik eine Oxid-Keramik wie zum Beispiel eine Aluminium-Oxid Keramik (AlO3) verwendet. Beispielsweise umfasst die Löschkammer, ein Treibelement zum Treiben des etwaigen bei einem Schaltvorgang des mechanischen Schalters entstehenden Lichtbogens zu oder zwischen die Löschstreifen.

Bei Betrieb wird aufgrund der Ausbildung der Löschstreifen als elektrischer Isolator der Lichtbogen nicht mittels der Löschstreifen teilweise aufgefangen, sodass mehrere Teillichtbögen ausgebildet werden. Vielmehr wird aufgrund der elektrisch isolierenden Eigenschaften der Löschstreifen der Lichtbogen verformt, insbesondere gebogen, sodass eine Länge des Lichtbogens verlängert ist. Aufgrund der vergrößerten Länge des Lichtbogens und der damit einhergehenden höheren erforderlichen elektrischen Spannung ist es möglich, dass der Lichtbogen erlischt.

Somit weist bei Erlöschen der Lichtbogen eine Länge auf, die anderweitig lediglich mit einer vergrößerten Löschkammer erreicht werden kann.

Zudem erfolgt mittels der Löschstreifen eine Abkühlung des Lichtbogens, nämlich des zur Ausbildung des Lichtbogens erforderlichen Plasmas. Infolgedessen steigt ebenfalls die elektrische Spannung, die zum Aufrechterhalten des Lichtbogens erforderlich ist, und bei einer ausreichenden Abkühlung erlischt der Lichtbogen. Dabei erfolgt aufgrund der thermischen Leitfähigkeit der Löschstreifen ein effizienter Abtransport der Wärme von dem Bereich der Löschstreifen, in dem der Wärmeeintrag von dem Lichtbogen in den jeweiligen Löschstreifen erfolgt. Infolgedessen ist eine Kühlwirkung weiter verbessert, sodass auch bei einer verringerten Baugröße der Löschkammer ein sicheres Ablöschen des Lichtbogens erfolgt. Zudem ist aufgrund der separaten Löschstreifen auch bei einer unregelmäßigen Erwärmung dieser eine sich deswegen ausbildende mechanische Spannung auf die einzelnen Löschstreifen beschränkt. Daher bilden sich auch bei einer vergleichsweise großen Temperaturdifferenz zwischen den einzelnen Löschstreifen keine mechanische Spannung zwischen diesen aus, die zu einer Zerstörung führen könnte. Infolgedessen ist eine Stabilität und Betriebssicherheit erhöht.

Das Kraftfahrzeug ist beispielsweise landgebundenen und zum Beispiel ein Personenkraftwagen (Pkw). Besonders bevorzugt jedoch ist das Kraftfahrzeug ein Nutzkraftwagen, wie ein Bus oder besonders bevorzugt ein Lastkraftwagen (Lkw). Das Kraftfahrzeug weist ein Hochvoltbordnetz auf, mittels dessen insbesondere eine Gleichspannung zwischen 400 V und 800 V geführt ist. Ferner umfasst das Kraftfahrzeug ein Niedervoltbordnetz, mittels dessen zweckmäßigerweise eine Gleichspannung von 12 V, 24 V oder 48 V geführt ist. Hierbei dient das Niedervoltbordnetz insbesondere der Bestromung von Nebenaggregaten des Kraftfahrzeugs, mittels derer beispielsweise eine Bereitstellung von Komfortfunktionen oder dergleichen realisiert wird. Das Hochvoltbordnetz dient insbesondere der Bestromung eines Hauptantriebs, der zweckmäßigerweise einen Elektromotor aufweist. Hierbei ist mittels des Hochvoltbordnetzes vorzugsweise der Hauptantrieb mit einer Hochvoltbatterie elektrisch verbunden, mittels derer das Hochvoltbordnetz gespeist ist.

Das Niedervoltbordnetz ist zum Beispiel über einen Transformator durch das Hochvoltbordnetz gespeist oder mittels einer separaten Batterie.

Das Kraftfahrzeug umfasst einen Schutzschalter mit einem in einen Hauptstrompfad eingebrachten mechanischen Schalter, der einen Festkontakt und einen an einer dazu beweglich gelagerten Kontaktbrücke angebundenen Bewegkontakt aufweist. Der Schutzschalter weist ferner einen Antrieb auf, der in Wirkverbindung mit der Kontaktbrücke ist, und der eine erste Antriebseinheit und eine zweite Antriebseinheit umfasst. Die erste Antriebseinheit ist mittels eines Steuerkreises bestromt, und die zweite Antriebseinheit ist in den Hauptstrompfad eingebracht.

Der Steuerkreis ist elektrisch mit dem Niedervoltbordnetz verbunden und somit mittels des Niedervoltbordnetzes gespeist. Das Hochvoltbordnetz weist den Hauptstrompfad des Schutzschalters auf, der somit einen Teil des Hochvoltbordnetzes bildet und in dieses eingebracht ist. Folglich befindet sich der mechanische Schalter und die erste Antriebseinheit auf unterschiedlichen elektrischen Potentialen. Bei Betätigung des Schutzschalters wird das Hochvoltbordnetz aufgetrennt, sodass über dieses zumindest teilweise ein elektrischer Stromfluss unterbunden ist.

Ferner betrifft die Erfindung auch die Verwendung eines derartigen Schutzschalters zur Absicherung eines Hochvoltbordnetz ist eines Kraftfahrzeugs

Die im Zusammenhang mit dem Schutzschalter erläuterten Weiterbildungen und Vorteile sind sinngemäß auch auf das Kraftfahrzeug zu übertragen und umgekehrt.

Nachfolgend werden Ausführungsbeispiele der Erfindung anhand einer Zeichnung näher erläutert. Darin zeigen:
- Fig. 1: schematisch ein Kraftfahrzeug mit einem Schutzschalter,
- Fig. 2: einen vereinfachten Schaltplan des Schutzschalter, der einen "Moving Magnet Aktuator" mit zwei Antriebseinheiten umfasst, und
- Fig. 3: schematisch den "Moving Magnet Aktuator" in einer Schnittdarstellung,
- Fig. 4: gemäß Fig. 2 eine alternative Ausführungsform des Schutzschalters, und
- Fig. 5: perspektivisch eine Löschkammer des mechanischen Schalters.

Einander entsprechende Teile sind in allen Figuren mit den gleichen Bezugszeichen versehen.

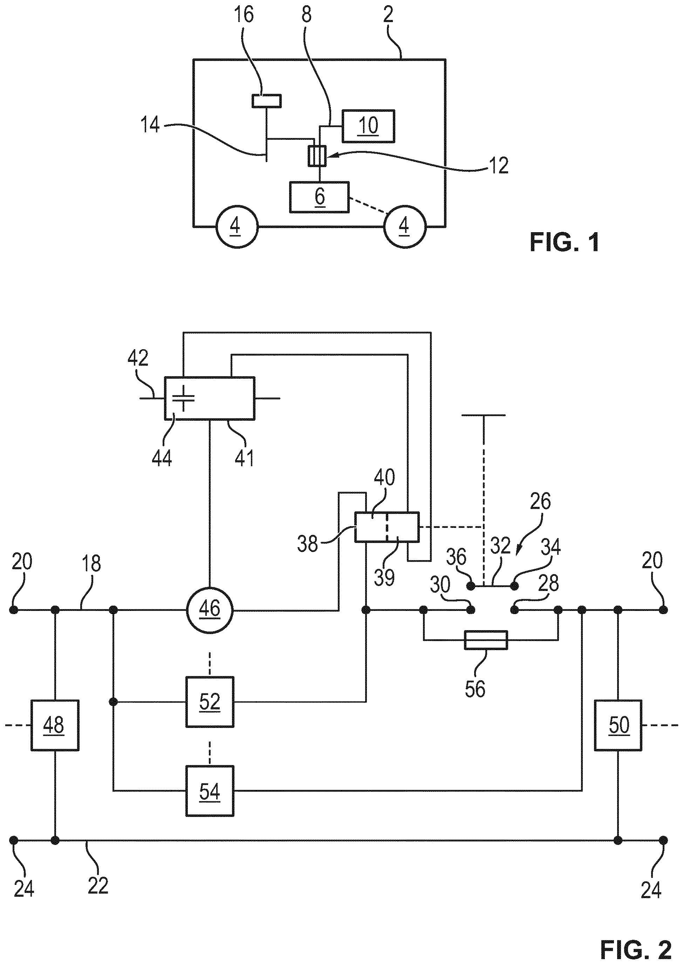

In Figur 1 ist schematisch vereinfacht ein Kraftfahrzeug 2 in Form eines Lastkraftwagens (Lkw) dargestellt. Das Kraftfahrzeug 2 weist mehrere Räder 4 auf, mittels derer ein Kontakt zu einer nicht näher dargestellten Fahrbahn erfolgt. Zumindest eines der Räder 4 ist mittels eines Hauptantriebs 6 angetrieben, der einen oder mehrere Elektromotoren umfasst. Mit anderen Worten ist das Kraftfahrzeug 2 entweder als Hybrid-Kraftfahrzeug oder Elektrokraftfahrzeug ausgestaltet.

Der Hauptantrieb 6 ist über ein Hochvoltbordnetz 8 mit einer Hochvoltbatterie 10 verbunden. Mittels der Hochvoltbatterie 10 wird somit das Hochvoltbordnetz 8 gespeist sowie der Hauptantrieb 6 betrieben. Von der Hochvoltbatterie 10 wird hierbei eine elektrische Gleichspannung zwischen 400 V und 800 V bereitgestellt, wobei die zwischen der Hochvoltbatterie 10 und dem Hauptantrieb 6 fließenden elektrischen Ströme mehrere 10 A betragen können. Ferner ist das Hochvoltbordnetz 8 mit einem nicht näher dargestellten Ladeanschluss verbunden, sodass über den Ladeanschluss und das Hochvoltbordnetz 8 die Hochvoltbatterie 10 geladen werden kann.

In das Hochvoltbordnetz 8 ist ein Schutzschalter 12 eingebracht, mittels dessen eine Absicherung des Hochvoltbordnetzes 8 erfolgt. Dabei ist es möglich, mittels des Schutzschalter 12 einen elektrischen Stromfluss zwischen der Hochvoltbatterie 10 sowie dem Hauptantrieb 6 zu unterbinden. Der Schutzschalter 12 löst hierbei in einem Fehlerfall aus, sodass im Fehlerfall, beispielsweise bei einer Beschädigung des Hauptantriebs 6, eine weitere Beschädigung oder ein unkontrolliertes Verhalten des Hauptantriebs 6 und auch eine Gefährdung von Insassen oder Passanten vermieden ist. Ferner ist der Schutzschalter 12 mit einem nicht näher dargestellten Bordcomputer signaltechnisch verbunden, mittels dessen unter Einbeziehung des Schutzschalters 12 sichere Funktionen ausgeführt oder Aufforderungen zur Durchführung von sicheren Funktionen an den Schutzschalter 12 übermittelt werden, die im Anschluss hieran mittels dessen zumindest teilweise durchgeführt werden. Folglich dient der Schutzschalter 12 auch der Bereitstellung von funktionaler Sicherheit.

Der Schutzschalter 12 ist ferner elektrisch mit einem Niedervoltbordnetz 14 verbunden, das mittels einer Batterie 16 gespeist ist. Mittels der Batterie 16 wir bei Betrieb eine Gleichspannung in Höhe von 24 V bereitgestellt, und mit dem Niedervoltbordnetz 14 werden nicht näher dargestellte Nebenaggregate bestromt, die dem Betrieb des Hauptantriebs 6 und/oder der Bereitstellung von Komfortfunktionen dienen.

In Figur 2 ist ein vereinfachter Schalterplan des Schutzschalters 12 dargestellt. Der Schutzschalter 12 weist einen Hauptstrompfad 18 auf, der sich zwischen zwei Anschlüssen 20 erstreckt. Die beiden Anschlüsse 20 sind dabei Schraub- oder Steckanschlüsse sowie in ein nicht näher dargestelltes Gehäuse des Schutzschalters 12 eingebracht, das aus einem Kunststoff gefertigt ist. Der Schutzschalter 12 weist ferner einen weiteren Hauptstrompfad 22 auf, der sich zwischen zwei weiteren Anschlüssen 24 erstreckt, die baugleich zu den Anschlüssen 20 sind. Der Hauptstrompfad 18 sowie der weitere Hauptstrompfad 22 bilden einen Teil des Hochvoltbordnetzes 8, das somit den Hauptstrompfad 18 aufweist. Hierfür sind die Anschlüsse 20 sowie die weiteren Anschlüsse 24 mit entsprechenden Kabeln oder sonstigen Leitungen des Hochvoltbordnetzes 8 elektrisch kontaktiert.

Der weitere Hauptstrompfad 22 ist lediglich mittels einer Stromschiene erstellt, die aus einem Metall, wie Kupfer oder Messing, erstellt ist. Über die weiteren Anschlüsse 24 ist der weitere Hauptstrompfad 22 mit Masse verbunden, und bei Normalbetrieb des Kraftfahrzeugs 2 liegt zwischen dem Hauptstrompfad 18 sowie dem weiteren Hauptstrompfad 22 die mittels der Hochvoltbatterie 10 bereitgestellte elektrische Gleichspannung an. Mit anderen Worten sind der Hauptstrompfad 18 sowie der weitere Hauptstrompfad 22 unterschiedlichen Polen der Hochvoltbatterie 10 zugeordnet.

In den Hauptstrompfad 18 ist ein mechanischer Schalter 26 eingebracht, mittels dessen somit die beiden Anschlüsse 20 verbunden sind, und der als Doppelunterbrecher ausgestaltet ist. Hierfür weist der mechanische Schalter 26 einen Festkontakt 28 sowie einen weiteren Festkontakt 30 auf, die mittels jeweils einer starren Stromschiene mit einem der Anschlüsse 20 starr verbunden und zueinander beabstandet sind. Die beiden Festkontakte 28, 30 sind aus einem von dem Material der zugeordneten Stromschienen abweichenden Material erstellt, das insbesondere vergleichsweise abbrandsicher ist.

Der mechanische Schalter 26 umfasst ferner eine Kontaktbrücke 32 die mittels einer weiteren Stromschiene gebildet ist, die längsverschieblich, also beweglich, mittels einer nicht näher dargestellten Führung des Gehäuses des Schutzschalters 12 gelagert ist. An den gegenüberliegenden Enden der Kontaktbrücke 32 ist ein Bewegkontakt 34 sowie ein weiterer Bewegkontakt 36 angebunden, nämlich geschweißt, wobei das Material der Bewegkontakte 34, 36 dem Material der Festkontakte 28, 30 entspricht.

Mittels Verschiebens der Kontaktbrücke 32 ist es möglich, den Bewegkontakt 34 in mechanisch direkten Kontakt mit dem Festkontakt 28 sowie den weiteren Bewegkontakt 36 in mechanisch direkten Kontakt mit dem weiteren Festkontakt 30 zu verbringen, sodass diese jeweils elektrisch leitend verbunden sind. Infolgedessen besteht eine niederohmige elektrische Verbindung zwischen den beiden Anschlüssen 20, und der mechanische Schalter 26 ist elektrisch leitend. Mit anderen Worten ist der Schalter 26 geschlossen. Ferner ist möglich, mittels Verstellens der Kontaktbrücke 32 die jeweils zugeordneten Kontakte 28, 30, 34, 36 voneinander zu beabstanden. In diesem Fall ist der mechanische Schalter 26 elektrisch nicht leitend und somit geöffnet.

Die Kontaktbrücke 32 ist mittels eines Antriebs 38 angetrieben, sodass bei Betrieb des Antriebs 38 die Kontaktbrücke 32 verstellt und somit der mechanische Schalter 26 geschlossen oder geöffnet wird. Folglich ist der Antrieb 38 in Wirkverbindung mit der Kontaktbrücke 32, nämlich mechanisch mit dieser gekoppelt. Der Antrieb 38 weist eine erste Antriebseinheit 39 und eine zweite Antriebseinheit 40 auf. Die zweite Antriebseinheit 40 ist in den Hauptstrompfad 18 zwischen einen der Anschlüsse 20 dem weiteren Festkontakt 30 eingebracht. Hierfür ist die Stromschiene dort aufgetrennt, oder mittels der Stromschiene ist teilweise die zweite Antriebseinheit 40 gebildet. Somit wird bei einem elektrische Stromfluss über den Hauptstrompfad 18 auch immer die zweite Antriebseinheit 40 bestromt.

Die Bestromung der ersten Antriebseinheit 39 erfolgt mittels einer Steuereinheit 41, die hierfür elektrisch mit dem Antrieb 38, nämlich der ersten Antriebseinheit 39, verbunden ist. Zur Bestromung der Steuereinheit 41, und folglich der ersten Antriebseinheit 39, ist die Steuereinheit 41 mit einem Steuerkreis 42 elektrisch kontaktiert, mittels dessen eine Gleichspannung bereitgestellt ist. Der Steuerkreis 42 ist elektrisch direkt mit dem Niedervoltbordnetz 14 kontaktiert, sodass auch mittels des Steuerkreises 42 die Gleichspannung in Höhe von 24 V geführt ist. Zusammenfassend ist somit die erste Antriebseinheit 39 mittels des Steuerkreises 42 bestromt.

Die Steuereinheit 41 weist einen Energiespeicher 44 in Form eines Kondensators auf, der über den Steuerkreis 42 geladen ist, und der elektrisch parallel zu einem Mikrocontroller der Steuereinheit 41 geschaltet ist. Somit werden mittels des Energiespeichers 44 Schwankungen der elektrischen Spannung und/oder des elektrischen Stroms des Niedervoltbordnetz 14 abgefangen, sodass eine Beschädigung des Mikrocontrollers hierdurch vermieden ist. Auch ist es aufgrund des Energiespeichers 44 möglich, bei einem Ausfall des Niedervoltbordnetzes 14 zumindest einmal den Antrieb 38 zu betätigen und auf diese Weise den Schalter 26 zu öffnen.

In einer näher dargestellten Variante weist die Steuereinheit 41 zudem eine Ladungspumpe auf, mittels derer es ermöglicht ist, die an dem Kondensator 44 anliegende elektrische Spannung im Vergleich zu der mittels des Niedervoltbordnetzes 14 bereitgestellten elektrischen Spannung zu erhöhen, sodass die mittels des Energiespeichers 44 gespeicherte Energiemenge vergrößert ist. Somit ist stets ein sicherer Betrieb des Antriebs 38 möglich, auch wenn ein vollständiger Ausfall des Niedervoltbordnetzes 14 vorliegt oder der Antrieb 38 geringfügig blockiert ist.

Mittels des Mikrocontrollers wird die Bestromung der ersten Antriebseinheit 39 eingestellt, und dieser ist mit einem Stromsensor 46 des Hauptstrompfads 18 signaltechnisch verbunden. Der Stromsensor 46 ist in den Hauptstrompfad 18 eingebracht und als Shunt gestaltet, der elektrisch in Reiher zu der zweiten Antriebseinheit 40 geschaltet ist. Somit ist mittels des Stromsensors 46 ein Messen des mittels des Hauptstrompfads 18 geführten elektrischen Stroms ermöglicht. Ferner weist der Schutzschalter 12 einen ersten Spannungssensor 48 auf, mittels dessen die zwischen einem der Anschlüsse 20 und einem der weiteren Anschlüsse 24 anliegende elektrische Spannung gemessen werden kann. Mittels eines zweiten Spannungssensors 50 ist die zwischen dem verbleibenden Anschluss 20 und dem verbleibenden weiteren Anschluss 24 anliegende elektrische Spannung messbar. Mittels eines dritten Spannungssensors 52 ist die über die Reihenschaltung aus dem Stromsensor 46 und der zweiten Antriebseinheit 40 abfallende elektrische Spannung messbar, und mittels eines vierten Spannungssensors 54 ist die über die Reihenschaltung aus dem Stromsensor 46, der zweiten Antriebseinheit 40 und dem mechanischen Schalter 26 abfallende elektrische Spannung messbar. Sämtliche Spannungssensoren 48, 50, 52, 54 sind signaltechnisch mit der Steuereinheit 40, nämlich dem Mikrocontroller verbunden.

Bei Betrieb wird mittels des Mikrocontrollers der Steuereinheit 41 die zeitliche Änderung der mittels der Spannungssensoren 48, 50 52, 54 gemessenen elektrischen Spannungen sowie des mittels des Stromsensors 46 gemessenen elektrischen Stroms überprüft. Wenn die zeitliche Änderung des gemessenen Stroms einem Anstieg entspricht und einen bestimmten Grenzwert überschreitet, wird mittels der Steuereinheit 41 der Antrieb 38, nämlich die erste Antriebseinheit 39, angesteuert, sodass der Schalter 26 geöffnet wird. Der Grenzwert ist derart gewählt, dass dieser lediglich in einem Fehlerfall, nämlich bei einem elektrischen Kurzschluss des Elektromotors des Hauptantriebs 6, überschritten wird. Aufgrund der Betätigung des mechanischen Schalter 26 wird der elektrische Strom unterbrochen und somit eine weitere Zerstörung des Elektromotors oder weitere Komponenten des Hauptantriebs 6 vermieden.

Zusätzlich ist die zweite Antriebseinheit 40 derart ausgebildet, dass mittels dieser im Normalbetrieb, also wenn der mittels des Hauptstrompfads 18 geführte elektrische Strom dem Soll-Wert entspricht und/oder insbesondere kleiner oder gleich einem Nennwert ist, keine oder lediglich eine geringe Kraft ausgeübt wird, sodass die Kontaktbrücke 32 nicht bewegt wird. Wenn jedoch der mittels des Hauptstrompfads 18 geführte elektrische Strom einen weiteren Grenzwert oder den Grenzwert überschreitet, ist die mittels der zweiten Antriebseinheit 40 ausgeübte Kraft derart, insbesondere ausreichend groß, dass die Kontaktbrücke 32 bewegt und der mechanische Schalter 26 geöffnet wird. Folglich wirkt die zweite Antriebseinheit 40 bei einem übermäßigen Anstieg des elektrischen Stroms über den Hauptstrompfad 18 unterstützend zur ersten Antriebseinheit 39. Zudem ist somit sichergestellt, dass auch bei einem Ausfall der Steuereinheit 41 oder der ersten Antriebseinheit 39 der mechanische Schalter 26 im Fehlerfall sicher geöffnet wird.

Ebenso erfolgt das Betätigen des mechanischen Schalter 26 mittels der Steuereinheit 41, wenn anhand der mittels der Spannungssensoren 48, 50, 52, 54 erfassten elektrischen Spannung auf den Fehlerfall, wie eine Fehlfunktion von bestimmten Komponenten des Kraftfahrzeugs 2, geschlossen wird. Hierbei kann es sich auch um eine Fehlfunktion der zweiten Antriebseinheit 40 handeln, sodass diese nicht mehr oder lediglich teilweise einsatzbereit ist. Auch in diesem Fall wird mittels der Steuereinheit 41 die erste Antriebseinheit 39 bestromt, sodass der Schalter 26 geöffnet wird, also wenn dies mittels der zweiten Antriebseinheit 40 nicht möglich ist, oder der Fehlerfall nicht zu einer Betätigung der zweiten Antriebseinheit 40 führt.

Wenn der mechanische Schalter 26 geöffnet wird, und der Fehlerfall vorliegt, liegt zwischen den Anschlüssen 20 während des Öffnens des Schalter 26 eine vergleichsweise hohe elektrische Spannung an. Infolgedessen bildet sich zwischen den Festkontakten 28, 30 und dem jeweils zugeordneten und sich wegbewegenden Bewegkontakt 34, 36 jeweils ein Lichtbogen aus, über den auch weiterhin ein Stromfluss erfolgt. Jedoch nimmt die über den mechanischen Schalter 26 abfallende elektrische Spannung zu. Infolgedessen kommutiert der elektrische Strom von dem elektrischen Schalter 26 auf eine parallel hierzu geschaltete Sicherung 56. Somit fließt der elektrische Strom zwischen den beiden Anschlüssen 20 über die Sicherung 56, weswegen die Lichtbögen erlöschen.

Die Sicherung 56 ist derart bemessen, dass diese im Fehlerfall auslöst. Die Schwelle, ab der die Sicherung 56 dabei auslöst, liegt zwischen dem Wert des elektrischen Stroms im Normalbetrieb und dem Wert des elektrischen Stroms, der sich bei einem Kurzschluss ergibt, wobei der genaue Wert der Schwelle dazwischen beliebig gewählt werden kann, ohne dass die Funktionsweise des Schutzschalters 12 abgeändert ist. Somit können Fehlertoleranzen bei der Sicherung 56 vergleichsweise groß gewählt werden, weswegen Herstellungskosten reduziert sind. Nach dem Auslösen der Sicherung 56 wird mittels dieser ebenfalls kein elektrischer Strom mehr geführt, und die beiden Anschlüsse 20 sind zueinander galvanisch getrennt.

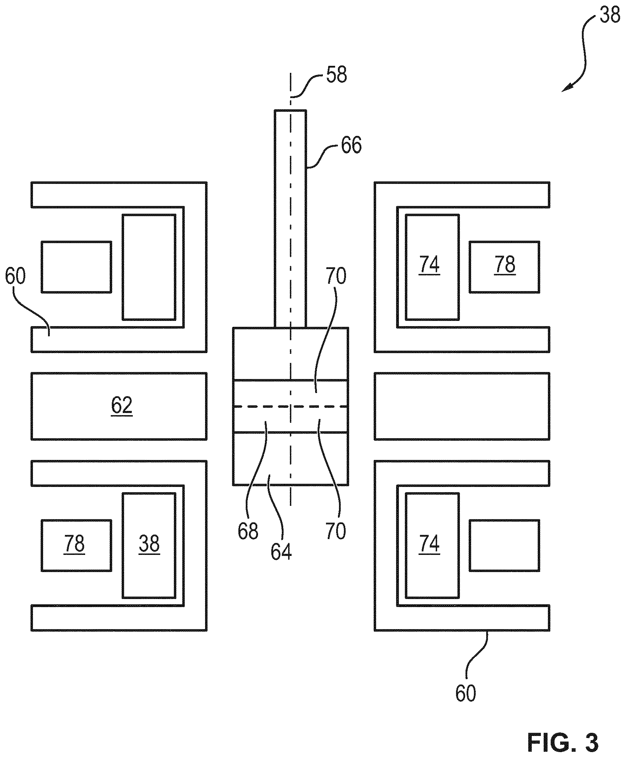

In Figur 3 ist in einer Schnittdarstellung entlang einer Achse 58 der Antrieb 38 schematisch dargestellt. Der Antrieb 38 ist als "Moving Magnet Aktuator" ausgestaltet und weist somit zwei konzentrisch zu der Achse 58 und entlang dieser beabstandet angeordnete scheibenspulen- oder trommelartige Halter 60 auf, die aus einem ferromagnetischen Material erstellt sind. Zwischen diesen ist ein ringförmiges Kurzschlussblech 62 konzentrisch zu der Achse 58 positioniert, das ebenfalls aus einem ferromagnetischen Material erstellt ist. Mittels der Halter 60 und des Kurzschlussblechs 62 ist somit ein Hohlzylinder gebildet, innerhalb dessen ein weiterer Halter 64 aus einem Kunststoff angeordnet und mittels einer nicht näher dargestellten Führung entlang der Achse 58 verschieblich gelagert ist. An dem Halter 64 ist ein sich entlang der Achse 58 erstreckender Stab 66 befestigt, der an der Kontaktbrücke 32 befestigt ist, entweder direkt oder über eine nicht näher dargestellte Mechanik. In den zylinderartigen weiteren Halter 64 ist ein zylinderförmiger Permanentmagnet 68 eingebettet, der zwei magnetische Pole 70 aufweist, von denen jeder jeweils eines der Enden des Permanentmagneten 68 in einer Richtung parallel zur Achse 58 bildet.

Die erste Antriebseinheit 39 des Antriebs 38 umfasst zwei elektrische Spulen 74. Jede der elektrischen Spulen 74, die zueinander baugleich sind, ist auf jeweils einen der Halter 60 gewickelt, und diese sind zueinander elektrisch parallel geschaltet. Die zweite Antriebseinheit 40 weist zwei weitere elektrische Spulen 78 auf, von denen eine auf eine der elektrischen Spulen 74 und die andere auf die verbleibende elektrische Spulen 74 gewickelt ist. Auch die beiden weiteren elektrischen Spulen 78 sind zueinander elektrisch parallel geschaltet. Die Anzahl der Windungen der weiteren elektrischen Spulen 78 ist geringer als die Anzahl der Windungen der elektrischen Spulen 74, und jede der weiteren elektrischen Spulen 78 weist vorzugsweise höchstens 10 Windungen auf.

Wenn die beiden Antriebseinheiten 39, 40 nicht bestromt werden, wird aufgrund der magnetischen Wechselwirkung mit dem Kurzschlussblech 62 sowie den Haltern 60 der Permanentmagnet 68 in eine Position im Wesentlichen innerhalb des Kurzschlussblechs 62 gezogen, wobei auf den Permanentmagneten 68 und somit auch auf den weiteren Halter 64 eine Kraft von ca. 30 N wirkt. Mit dieser Kraft wird somit auch die Kurzschlussbrücke 32 in der gewünschten Position gehalten, nämlich in der, bei der der mechanische Schalter 26 geschlossen ist.

Falls über den Hauptstrompfad 18 ein elektrischer Strom fließt, wird die zweite Antriebseinheit 40 bestromt, sodass mittels der weiteren elektrischen Spulen 78 ein Magnetfeld erstellt wird, das mit dem Magnetfeld des Permanentmagneten 68 wechselwirkt. Die Wechselwirkung ist aufgrund der geringen Windungszahl der weiteren elektrischen Spulen 78 jedoch gering, wenn mittels des Hauptstrompfads 18 der Nennstrom geführt wird, und die auf den Permanentmagneten 68 wirkende Kraft ist geringer als die 30 N, sodass die Position des Permanentmagneten 68 nicht verändert wird.

Im Fehlerfall wird mittels der Steuereinheit 41 die erste Antriebseinheit 39 bestromt, sodass mittels der elektrischen Spulen 74 ebenfalls jeweils ein Magnetfeld erstellt wird. Auch ist die Stärke der mittels der weiteren elektrischen Spulen 78 erstellten Magnetfelder vergrößert. Infolgedessen wird der Permanentmagnet 68 von einem der Halter 60 entlang der Achse 58 weggedrückt und zu dem verbleibenden Halter 60 gezogen. Dabei wirken vergleichsweise große Kräfte auf den Permanentmagneten 68 und folglich über den weiteren Halter 64 und den Stab 66 auch auf die Kontaktbrücke 32, sodass der mechanische Schalter 26 vergleichsweise schnell geöffnet wird.

Falls der Fehlerfall nicht vorliegt, und beispielsweise lediglich die Bestromung des Hauptantriebs 6 unterbrochen werden soll, zum Beispiel für eine Wartung, wird mittels der Steuereinheit 41 lediglich die erste Antriebseinheit 39 bestromt, wobei der Schalter 26 vergleichsweise langsam geöffnet wird. Infolgedessen ist eine elektrische und auch eine mechanische Belastung des Schutzschalters 12 reduziert. Da in diesem Fall zwischen den Anschlüssen 20 die anliegende elektrische Spannung begrenzt ist, löst die Sicherung 56 nicht aus, und der Schutzschalter 12 kann, beispielsweise nach Beenden der Wartung, erneut in den elektrisch leitenden Zustand versetzt werden. Hierfür wird beispielsweise die erste Antriebseinheit 39 in die entgegengesetzte Richtung bestromt oder die Bestromung beendet, sodass der Permanentmagnet 68 erneut zu dem Kurzschlussblech 62 gezogen wird.

In einer nicht näher dargestellten Variante umfasst die zweite Antriebseinheit 40 mehrere Dioden, mittels derer sichergestellt ist, dass die Stromflussrichtung durch die weiteren elektrische Spulen 78 stets gleich ist, unabhängig von der Stromflussrichtung des Hauptstrompfads 18. Somit ist es möglich, den Schutzschalter 12 bidirektional zu betreiben.

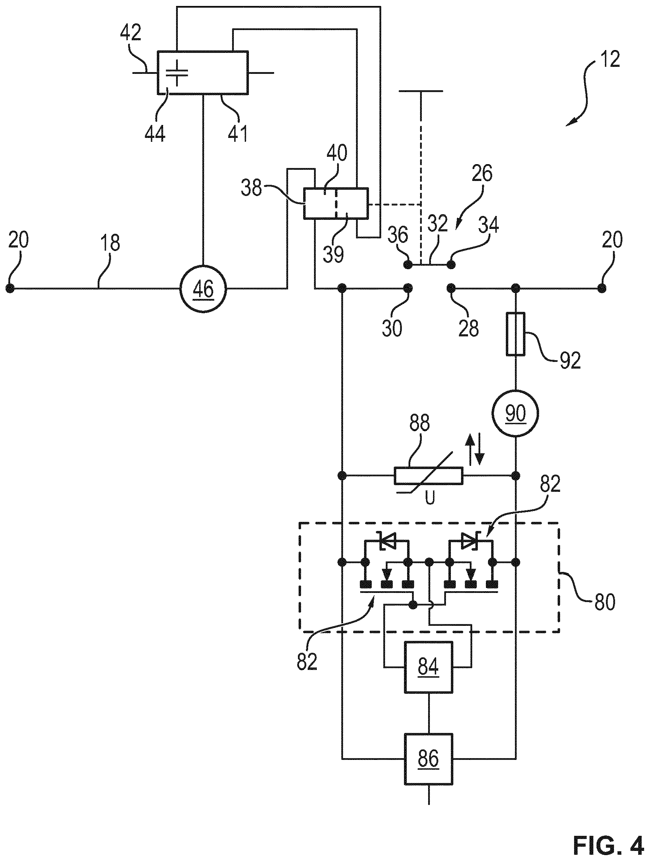

In Figur 4 ist eine alternative Ausgestaltung des Schutzschalters 12 schematisch vereinfacht dargestellt, wobei einige Komponenten, wie der Hauptstrompfad 22 sowie die Spannungssensoren 48 ,50, 52, 54, nicht gezeigt sind. Diese sind jedoch ebenfalls vorhanden, können aber auch, wie ebenfalls bei der vorherigen Ausgestaltungsform, weggelassen werden. Der Antrieb 38 mit den beiden Antriebseinheiten 39, 40 sowie der mechanische Schalter 26 sind nicht verändert.

Jedoch ist die Sicherung 56 durch eine Schaltergruppe 80 ersetzt, mittels derer somit der mechanische Schalter 26 überbrückt ist. Die Schaltergruppe 80 umfasst zwei antiseriell zueinander geschaltete Halbleiterschalter 82. Folglich sind dem mechanischen Schalter 26 die zwei Halbleiterschalter 82 parallel geschaltet. Die beiden Halbleiterschalter 82 werden mittels einer weiteren Steuereinheit 84 betrieben und mittels dieser entweder in den elektrisch leitenden oder elektrisch nicht leitenden Zustand versetzt. Die Bestromung der weiteren Steuereinheit 84 erfolgt mittels einer weiteren Spannungsversorgung 86, die entweder mittels einer über den mechanische Schalter 26 abfallende elektrische Spannung oder mittels des Steuerkreises 42 gespeist ist.

Parallel zu der Schaltergruppe 80 ist ein Überspannungsschutz 88 geschaltet, der in der dargestellten Variante ein Varistor ist. In einer nicht näher dargestellten Variante ist der Überspannungsschutz 88 mittels Zener-Dioden, TVS-Dioden, einer RCD-Schaltung, einer regelbaren ohmschen Last oder eine Kombination hieraus realisiert. Mittels des Überspannungsschutzes 88 wird eine elektrische Überspannung an der Schaltergruppe 80 sowie der weiteren Steuereinheit 84 und der weiteren Spannungsversorgung 86 vermieden, die anderweitig zu einer Zerstörung dieser führen könnte. Zwischen dem Hauptstrompfad 18 und der Schaltergruppe 80 ist ferner ein weiterer Stromsensor 90 sowie eine weitere Sicherung 92 elektrisch in Reihe geschaltet.

Bei dieser Ausführungsform des Schutzschalters 12 sind die Halbleiterschalter 82 elektrischen nicht leitend, solange der mechanische Schalter 26 geschlossen ist. Wenn der Schalter 26 geöffnet wird, steigt die über der Schaltergruppe 80 anliegende elektrische Spannung an, sodass die weitere Spannungsversorgung 86 betrieben und daher die weitere Steuereinheit 84 bestromt wird. Mittels der weiteren Steuereinheit 84 wird die Schaltergruppe 80, nämlich die einzelnen Halbleiterschalter 82, angesteuert, sodass diese stromführend werden. Infolgedessen kommutiert der elektrische Strom und wird mittels der Schaltergruppe 80 geführt. Daher erlöschen die zwischen den Festkontakten 28, 30 und den jeweiligen Bewegkontakten 34, 36 gebildeten Lichtbögen. Nachfolgend werden die Halbleiterschalter 82 elektrisch derart angesteuert, dass diese elektrische sperren, sodass der elektrische Stromfluss zwischen den beiden Anschlüssen 20 beendet wird.

Mittels des Überspannungsschutzes 88 wird bis dahin sichergestellt, dass keine Überlastung der Halbleiterschalter 82 erfolgt. Falls mittels des weiteren Stromsensors 90, der signaltechnisch mit der weiteren Steuereinheit 84 verbunden ist, erfasst wird, dass ein vergleichsweise großer elektrischer Strom mit der Schaltergruppe 80 geführt wird, der zu einer Beschädigung der Halbleiterschalter 82 führen könnte, werden die Halbleiterschalter 82 ebenfalls geöffnet und somit eine Beschädigung der Schaltergruppe 80 vermieden. Mittels der weiteren Sicherung 92 wird dabei sichergestellt, dass auch bei einer Fehlfunktion der weiteren Steuereinheit 84 sowie bei einem vergleichsweise hohen elektrischen Strom der Stromfluss über die Schaltergruppe 80 unterbrochen wird.

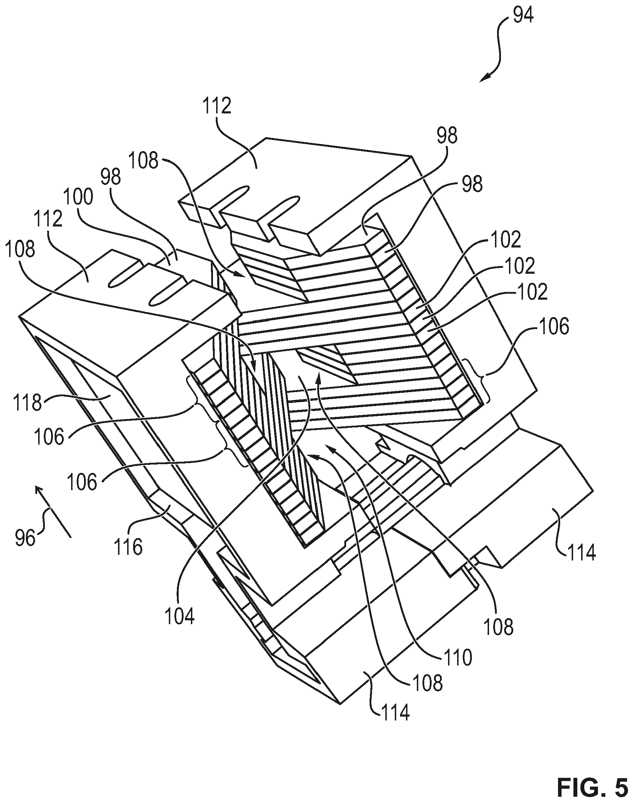

In Figur 5 ist perspektivisch eine Löschkammer 128 des mechanischen Schalters 26 dargestellt. Die Löschkammer 94 dient hierbei dem Ablöschen eines bei einem Schaltvorgang des mechanischen Schalters 26 entstehenden Lichtbogens, sofern nicht die anderen vorhandenen Bauteile hierfür herangezogen werden. Die Löschkammer 94 weist mehrere in einer Stapelrichtung 96 übereinander gestapelte Löschstreifen 98 auf. Die Löschstreifen 98 sind aus einer Aluminium-Oxid Keramik gefertigt sowie flächig ausgestaltet und senkrecht zur Stapelrichtung 96 angeordnet. Die Dicke der Löschstreifen 98, also deren Ausdehnung in Stapelrichtung 96, beträgt hierbei zwischen 1 mm und 2 mm. Die Löschstreifen 98 liegen direkt aneinander, sodass ein Stapel 100 gebildet ist. Der Stapel 100 weist dabei mehrere in der Stapelrichtung 96 übereinander angeordnete Lagen 102 auf, die somit senkrecht zur Stapelrichtung 82 angeordnet sind.

Jeder der Lagen 102 sind zwei der Löschstreifen 98 zugeordnet. Die beiden Löschstreifen 98 jeder Lage 102 sind hierbei zueinander unterschiedlich, und einer der Löschstreifen 98 ist keilförmig und der verbleibende trapezförmig ausgestaltet. Mit anderen Worten unterscheiden sich die Löschstreifen 98, die jeder der Lagen 102 zugeordnet sind, wobei jedoch jeder Lage 102 die gleichen Löschstreifen 98 zugeordnet sind, also die gleiche Art. Mit anderen Worten weist die Löschkammer 94 zwei unterschiedliche Arten von Löschstreifen 98 auf, nämlich die keilförmigen und die trapezförmigen, und diese sind gleichmäßig auf die Lagen 102 aufgeteilt.

Die beiden Löschstreifen 98 jeder Lage 102 sind zueinander senkrecht zu der Stapelrichtung 96 beabstandet, sodass zwischen diesen ein Schlitz 104 gebildet ist. Jeweils vier der Lagen 102 sind zu jeweils einer Gruppe 106 zusammengefasst, wobei die Löschstreifen 98 jeder Gruppe 106 bündig zueinander angeordnet sind. Die Löschstreifen 98 der jeweils benachbarten Gruppe 106 hingegen sind spiegelverkehrt angeordnet, sodass der Stapel 100 mehrere in der Stapelrichtung 96 übereinanderliegende und voneinander abgetrennte Kammern 108 aufweist, die jeweils mittels der zueinander fluchtenden Schlitze 104 gebildet sind. Aufgrund der Keil- bzw. Trapezform ist dabei bei jeder der Lagen 102 eine Kerbe 110 gebildet, die in die jeweilige Kammern 108 übergehen. Es sind insgesamt vier derartige Gruppen 106 vorhanden.

Der Stapel 100 ist beidseitig mittels jeweils eines Halters 112 umgriffen und somit stabilisiert. Die Halter 112 sind zueinander spiegelbildlich und aus einem Kunststoff erstellt und weisen jeweils einen Fuß 114 auf. Die beiden Halter 112 sind an dem jeweiligen Fuß 114 aneinander befestigt, sodass der Stapel 100 kraftschlüssig zwischen den beiden Haltern 112 sowohl in Stapelrichtung 96 als auch senkrecht hierzu gehalten wird. Auf der dem Stapel 100 gegenüberliegenden Seite weist jeder der Halter 112 eine rechteckförmige topf- oder pfannenform ige Aufnahme 116 auf, innerhalb derer im Montagezustand jeweils ein Permanentmagnet 118 einliegt, die jeweils ein Treibelement bilden.

Die Löschkammer 94 ist bezüglich des Festkontakte 28, 30 sowie der Bewegkontakt 34, 36 derart orientiert, dass ein beim Betätigen des mechanischen Schalters 26, also wenn der Antrieb 38 betätigt wird, entstehender Lichtbogen im Bereich der Kerben 110 auf den Stapel 100 trifft. Aufgrund der Wechselwirkung zwischen dem Magnetfeld der Permanentmagneten 118 und dem von dem Lichtbogen erstellten Magnetfeld wird dieser weiter in den Stapel 100 getrieben, nämlich in die einzelnen Kammern 108. Somit bilden sich in den jeweiligen Kammern 108 einliegende Teilabschnitte des Lichtbogens aus, die u-förmig ausgestaltet sind. Die Teilabschnitte sind miteinander verbunden, wobei die Verbindungabschnitte den Stapel 100 auf der Seite der Kerben 110 umgreifen. Folglich weist der Lichtbogen eine vergleichsweise große Länge auf. Aufgrund der Kerben 110 ist dabei ein Umgehen der Löschkammer 94 durch den Lichtbogen nicht möglich. Wegen der Vergrößerung der Länge des Lichtbogens steigt eine zum Aufrechterhalten erforderliche elektrische Spannung an.

Ferner erfolgt ein Wärmeeintrag von dem den Lichtbogen bildenden Plasma in die einzelnen Löschstreifen 98, sodass der Lichtbogen abgekühlt wird. Aufgrund der verwendeten Keramik wird hierbei die Wärme vergleichsweise effektiv abgeführt und der Lichtbogen somit gekühlt. Wegen der Abkühlung steigt die zum Aufrechterhalten des Lichtbogens erforderliche elektrische Spannung ebenfalls an. Da die einzelnen Löschstreifen 98 zueinander separat sind, bildet sich hierbei in dem Stapel 100 auch bei einer ungleichmäßigen Erwärmung der einzelnen Löschstreifen 98 keine übermäßige mechanische Spannung aus, die zu einer Zerstörung führen könnte.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Hauptantrieb
- 8: Hochvoltbordnetz
- 10: Hochvoltbatterie
- 12: Schutzschalter
- 14: Niedervoltbordnetz
- 16: Batterie
- 18: Hauptstrompfad
- 20: Anschluss
- 22: weiterer Hauptstrompfad
- 24: weiterer Anschluss
- 26: mechanischer Schalter
- 28: Festkontakt
- 30: weiterer Festkontakt
- 32: Kontaktbrücke
- 34: Bewegkontakt
- 36: weiterer Bewegkontakt
- 38: Antrieb
- 39: erste Antriebseinheit
- 40: zweite Antriebseinheit
- 41: Steuereinheit
- 42: Steuerkreis
- 44: Energiespeicher
- 46: Stromsensor
- 48: erster Spannungssensor
- 50: zweiter Spannungssensor
- 52: dritter Spannungssensor
- 54: vierter Spannungssensor
- 56: Sicherung
- 58: Achse
- 60: Halter
- 62: Kurzschlussblech
- 64: weiterer Halter
- 66: Stab
- 68: Permanentmagnet
- 70: magnetischer Pol
- 74: elektrische Spule
- 78: weitere elektrische Spule
- 80: Schaltergruppe
- 82: Halbleiterschalter
- 84: weiter Steuereinheit
- 86: weitere Spannungsversorgung
- 88: Überspannungsschutz
- 90: weiterer Stromsensor
- 92: weitere Sicherung
- 94: Löschkammer
- 96: Stapelrichtung
- 98: Löschstreifen
- 100: Stapel
- 102: Lage
- 104: Schlitz
- 106: Gruppe
- 108: Kammer
- 110: Kerbe
- 112: Halter
- 114: Fuß
- 116: Aufnahme
- 118: Permanentmagnet

## Patentansprüche

1. Schutzschalter (12) mit einem in einen Hauptstrompfad (18) eingebrachten mechanischen Schalter (26), der einen Festkontakt (28) und einen an einer dazu beweglich gelagerten Kontaktbrücke (32) angebundenen Bewegkontakt (34) aufweist, und mit einem Antrieb (38), der in Wirkverbindung mit der Kontaktbrücke (32) ist, und der eine erste Antriebseinheit (39) und eine zweite Antriebseinheit (40) aufweist, wobei die erste Antriebseinheit (39) mittels eines Steuerkreises (42) bestromt ist, und wobei die zweite Antriebseinheit (40) in den Hauptstrompfad (18) eingebracht ist.

2. Schutzschalter (12) nach Anspruch 1,
**gekennzeichnet durch**
eine aus dem Steuerkreis (42) gespeiste Steuereinheit (41), mittels derer die erste Antriebseinheit (39) bestromt ist.

3. Schutzschalter (12) nach Anspruch 2,
**dadurch gekennzeichnet,**
**dass** die Steuereinheit (41) signaltechnisch mit einem Stromsensor (46) des Hauptstrompfads (18) verbunden ist.

4. Schutzschalter (12) nach einem der Ansprüche 1 bis 3,
**dadurch gekennzeichnet,**
**dass** die Steuereinheit (41) einen Energiespeicher (44) zur Bestromung des Antriebs (38) aufweist.

5. Schutzschalter (12) nach einem der Ansprüche 1 bis 4,
**dadurch gekennzeichnet,**
**dass** der Antrieb (38) einen "Moving Magnet Aktuator" umfasst, mittels dessen die beiden Antriebseinheiten (39, 40) gebildet sind.

6. Schutzschalter (12) nach einem der Ansprüche 1 bis 5,
**dadurch gekennzeichnet,**
**dass** der Antrieb (38) mechanisch mit der Kontaktbrücke (32) gekoppelt ist.

7. Schutzschalter (12) nach einem der Ansprüche 1 bis 6,
**dadurch gekennzeichnet,**
**dass** parallel zu dem mechanischen Schalter (26) eine Sicherung (56) geschaltet ist.

8. Schutzschalter (12) nach einem der Ansprüche 1 bis 7,
**dadurch gekennzeichnet,**
**dass** parallel zu dem mechanischen Schalter (26) ein Halbleiterschalter (82) geschaltet ist.

9. Schutzschalter () nach einem der Ansprüche 1 bis 8,
**dadurch gekennzeichnet,**
**dass** der mechanische Schalter (26) eine Löschkammer (94) aufweist, die mehrere flächige, parallel zueinander angeordnete und in einer Stapelrichtung (96) übereinandergestapelte Löschstreifen (98) umfasst, die aus einer Keramik erstellt sind.

10. Kraftfahrzeug (2) mit einem Hochvoltbordnetz (8), und mit einem Niedervoltbordnetz (14) und mit einem Schutzschalter (12) nach einem der Ansprüche 1 bis 9, wobei der Steuerkreis (42) elektrisch mit dem Niedervoltbordnetz (14) verbunden ist, und wobei das Hochvoltbordnetz (8) den Hauptstrompfad (18) aufweist.
